Europäisches Patentamt

European Patent Office

Office européen des brevets

Veröffentlichungsnummer: **0 285 841**

**A1**

# EUROPÄISCHE PATENTANMELDUNG

Anmeldenummer: 88103806.1

Int. Cl.⁴ **H04L 11/00**

Anmeldetag: 10.03.88

Priorität: 10.04.87 DE 3712130

Veröffentlichungstag der Anmeldung:
12.10.88 Patentblatt 88/41

Benannte Vertragsstaaten:
AT DE FR IT

Anmelder: **Siemens Aktiengesellschaft Berlin und München**
**Wittelsbacherplatz 2**
**D-8000 München 2(DE)**

Erfinder: **Schumacher, Hinrich, Ing. (grad.)**
**Heinleinstrasse 21**
**D-8000 München 71(DE)**

Schaltungsanordnung zum Übertragen von Datensignalen zwischen mit unterschiedlichen Datenübertragungsprozeduren arbeitenden Teilnehmereinrichtungen.

Mit dieser Schaltungsanordnung sollen Datensignale zwischen mit einer ersten Übertragungsprozedur arbeitenden Teilnehmereinrichtungen und lediglich über handzuvermittelnde Verbindungen erreichbaren, mit einer zweiten Datenübertragungsprozedur arbewitenden Teilnehmereinrichtungen übertragen werden.

Die vorgeschlagene Schaltungsanordnung weist eine Handvermittlungseinrichtung (HVE) mit wenigstens einer Auftragsspeicheranordnung (z. B. TA1) und einer Bedienungseinrichtung (PC1, PC2) auf. In die Auftragsspeicheranordnung sind für handzuvermittelnde Verbindungen Aufträge einschreibbar, die jeweils zumindest eine Auftragsnummer sowie für den Verbindungsaufbau dienende Wahlinformationen und zu übertragende Datensignale enthalten. Diese Aufträge sind in der Reihenfolge ihres Einschreibens derart auslesbar, daß die Bedienungseinrichtung zu jedem Auftrag zunächst lediglich die für einen Verbindungsaufbau erforderlichen Wahlinformationen und anschließend die zugehörigen Datensignale für eine Umsetzung und anschließende Weiterleitung zugeführt erhält.

Die Schaltungsanordnung ist beispielsweise anwendbar für die Übertragung von Datensignalen zwischen Teletex-Teilnehmereinrichtungen und lediglich über handzuvermittelnde Verbindung erreichbaren Telex-Teilnehmereinrichtungen.

## Schaltungsanordnung zum Übertragen von Datensignalen zwischen mit unterschiedlichen Datenübertragungsprozeduren arbeitenden Teilnehmereinrichtungen

Die Erfindung betrifft eine Schaltungsanordnung zum Übertragen von Datensignalen zwischen mit einer ersten Datenübertragungsprozedur arbeitenden ersten Teilnehmereinrichtungen und mit einer von der ersten Datenübertragungsprozedur verschiedenen zweiten Datenübertragungsprozedur arbeitenden zweiten Teilnehmereinrichtungen über eine Datenvermittlungsanlage unter Umsetzung der von den ersten Teilnehmereinrichtungen jeweils abgegebenen Datensignale in von den zweiten Teilnehmereinrichtungen aufnehmbare Datensignale, wobei die ersten Teilnehmereinrichtungen und zweiten Teilnehmereinrichtungen an gesonderte Anschlußschaltungen einer ersten bzw. zweiten Gruppe von Anschlußschaltungen angeschlossen sind.

Eine derartige Schaltungsanordnung ist bereits bekannt (DE-PS 29 12 649). Bei dieser bekannten Schaltungsanordnung ist für die Umsetzung von Datensignalen, die zwischen mit unterschiedlichen Übertragungsprozeduren arbeitenden Teilnehmereinrichtungen zu übertragen sind eine an einer Anschlußleitung jeder Gruppe von Anschlußschaltungen angeschlossene Umsetzeinrichtung vorgesehen. In diese Umsetzeinrichtung werden zunächst sämtliche von einer mit einer ersten Übertragungsprozedur arbeitenden Teilnehmereinrichtung abgegebenen Datensignale eingeschrieben. Anschließend werden diese Datensignale ausgelesen und mit einer gegenüber der ersten Übertragungsprozedur verschiedenen zweiten Übertragungsprozedur zu der in Frage kommenden Teilnehmereinrichtung weitergeleitet. Derartige Umsetzeinrichtungen sind nur in Datennetzen einsetzbar, über die Verbindungen zwischen Teilnehmereinrichtungen automatisch unter Benutzung vorgegebener Vermittlungsprozeduren, d. h. im Selbstwählbetrieb, hergestellt werden. International existieren jedoch nach wie vor Datennetze mit für nicht standardisierte Vermittlungsprozeduren ausgelegten Vermittlungseinrichtungen. Übergänge zu derartigen Datennetzen sind unter Einbeziehung der bekannten Umsetzeinrichtungen nicht möglich.

Seitens der Betreiber von mit standardisierten Vermittlungsprozeduren arbeitenden Datennetzen werden zuweilen neben Selbstwählvermittlungsanlagen auch Handvermittlungsplätze bereitgestellt, um auch Übergänge zu mit nicht standardisierten Vermittlungsprozeduren arbeitenden Datennetzen zu ermöglichen. Bei derartigen Übergängen ist jedoch bisher keine Umsetzung von Datensignalen vorgesehen.

Im Zusammenhang mit dem Betrieb solcher Handvermittlungsplätze ist bereits ein Verfahren für die Anrufverteilung von auf frei werdende Handvermittlungsplätze wartenden Anrufen bekannt (DE-PS 25 34 110). Bei diesem bekannten Verfahren werden die wartenden Anrufe vor einer Bearbeitung in einen Auftragsspeicher eingegeben. Den einzelnen Anrufen können dabei unterschiedliche Prioritäten zugeordnet werden. Bei Freiwerden von Handvermittlungsplätzen werden Anrufe in der Reihenfolge ihres Einschreibens unter Berücksichtigung der festgelegten Prioritäten für eine Bearbeitung durch die freien Handvermittlungsplätze ausgelesen.

Es ist nun Aufgabe der vorliegenden Erfindung, einen Weg zu zeigen, wie eine Schaltungsanordnung der eingangs genannten Art ausgebildet werden kann, um Datensignale zwischen mit einer ersten Datenübertragungsprozedur arbeitenden Teilnehmereinrichtungen und lediglich über handzuvermittelnde Verbindung erreichbaren, mit einer zweiten Datenübertragungsprozedur arbeitenden Teilnehmereinrichtungen übertragen werden können.

Gelöst wird die vorstehend aufgezeigte Aufgabe bei einer Schaltungsanordnung der eingangs genannten Art erfindungsgemäß dadurch, daß an wenigstens einer Anschlußschaltung jeder Gruppe von Anschlußschaltungen eine wenigstens eine Auftragsspeicheranordnung und eine Bedienungseinrichtung aufweisende Handvermittlungseinrichtung angeschlossen ist, daß in die Auftragsspeicheranordnung von der Datenvermittlungsanlage her für handzuvermittelnde Verbindungen Aufträge, die jeweils zumindest eine fortlaufend vergebene Auftragsnummer sowie von der jeweiligen ersten Teilnehmereinrichtung abgegebene Wahlinformationen und Datensignale enthalten, einschreibbar und in der Reihenfolge ihres Einschreibens durch von der Bedienungseinrichtung abgegebene Steuersignale derart auslesbar sind, daß die Bedienungseinrich tung zu jedem Auftrag zunächst lediglich die für einen Verbindungsaufbau erforderlichen Wahlinformationen und nach einem erfolgten Verbindungsaufbau die zugehörigen Datensignale für eine Umsetzung und anschließende Weiterleitung an die in Frage kommende zweite Teilnehmereinrichtung zugeführt erhält.

Die Erfindung bringt den Vorteil mit sich, daß einerseits auf relativ einfache Weise handzuvermittelnde Verbindungen unter Umsetzung der zu übertragenden Datensignale zwischen auf unterschiedlichen Datenübertragungsprozeduren arbeitenden Teilnehmereinrichtungen hergestellt werden können. Andererseits sind Handvermittlungseinrichtungen mit einem geringen schaltungstechnischen Aufwand an Datenvermittlungsanlagen anschließbar, so daß beispielsweise in bestehenden
für Selbstwählbetrieb vorgesehenen Datenvermittlungsanlagen Handvermittlungseinrichtungen
nachrüstbar sind, ohne daß in diesen Datenvermittlungsanlagen schaltungstechnische Änderungen erforderlich sind.

Vorteilhafte Ausgestaltungen der Erfindung ergeben sich aus den Unteransprüchen.

Im folgenden wird die vorliegende Erfindung
anhand einer Zeichnung beispielsweise näher beschrieben.

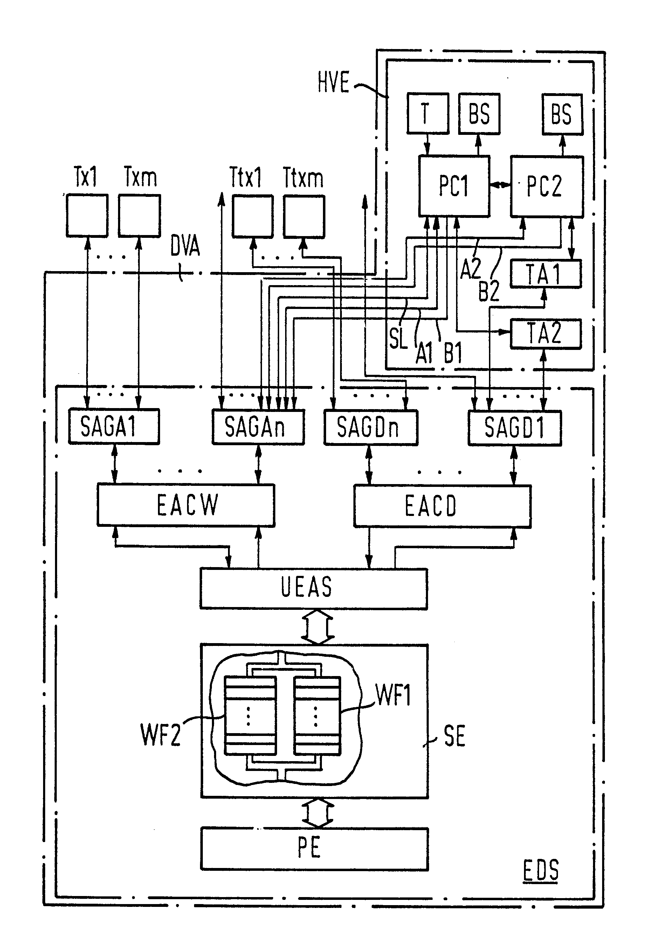

In der Zeichnung ist eine Datenvermittlungsanlage DVA dargestellt. Dieser Datenvermittlungsanlage ist eine für einen Selbstwählbetrieb ausgelegte Fernschreib-und Datenvermittlungsanlage
EDS zugehörig, welche allgemein für die Vermittlung von Datensignalen dient. Unter diese Datensignale fallen dabei beispielsweise auch Fernschreibzeichen oder Sprachsignale in digital
codierter Form. Von der Fernschreib-und Datenvermittlungsanlage sind zwei verschiedene Gruppen
von Anschlußschaltungen dargestellt. Zu einer ersten Gruppe gehören dabei die Anschlußschaltungen SAGA1 bis SAGAn, von denen in der
Zeichnung lediglich die Anschlußschaltungen
SAGA1 und SAGAn angedeutet sind. Diese Anschlußschaltungen dienen dazu, digitale Datensignale polariätswechselweise zu verarbeiten. Auf
den mit ihnen verbundenen Übertragungsleitungen
ist beispielsweise eine Signalübertra gung unter
Ausnutzung des internationalen Telegrafenalphabets Nr. 2 mit einer für Telexübertragungen
üblichen Datenübertragungsrate von 50 Bd
möglich. Damit sind beispielsweise an diese Anschlußschaltungen übliche Fernschreib-bzw. Telex-
Teilnehmerendgeräte anschließbar. In der Zeichnung sind mit der Anschlußschaltung SAGA1 mit
Tx1 bis Txm bezeichnete Telex-Teilnehmerendgeräte verbunden.

Die zweite Gruppe von Anschlußschaltungen
umfaßt die Anschlußschaltungen SAGD1 bis
SAGDn. Von diesen sind in der Zeichnung lediglich
die Anschlußschaltungen SAGD1 und SAGDn dargestellt. Diese Anschlußschaltungen verarbeiten
digitale Datensignale in Form von Bitgruppen, die
auch als Envelopes bezeichnet werden. Beispielsweise können sie digitale Datensignale entsprechend dem internationalen Alphabet IA Nr. 5 mit
einer Datenübertragungsrate von beispielsweise
2400 bit/s abgeben und aufnehmen. Es handelt
sich dabei um eine synchrone Datenübertragung.

An die gerade genannten Anschlußleitungen
sind beispielsweise sogenannte Bürofernschreibmaschinen anschließbar, die auch als
Teletex-Teilnehmerendgeräte bezeichnet werden.
In der Zeichnung sind an die Anschlußschaltung
SAGDn mit Ttx1 bis Ttxm bezeichnete Teletex-Teilnehmerendgeräte angeschlossen.

Bezüglich der zuvor genannten Anschlußschaltungen sei darauf hingewiesen, daß diese
jeweils mit einer Vielzahl von
Übertragungsleitungen verbunden sind, die als Teilnehmerleitungen für den Anschluß von beispielsweise Telex-Teilnehmerendgeräten bzw. Teletex-
Teilnehmerendgeräte oder als Amtsverbindungsleitungen benutzbar sind, über welche beispielsweise
jeweils zwei Fernschreib-und Datenvermittlungsanlagen miteinander in Verbindung stehen.

Neben den zuvor genannten Anschlußschaltungen sind als Schaltungsteile der Fernschreib-und Datenvermittlungsanlage EDS noch
Eingabe-/Ausgabe-Codewandler EACD und EACW,
eine Übertragungsablaufsteuerung UEAS, eine
Speichereinheit SE und schließlich eine Programmsteuereinheit PE angegeben. Auf das Zusammenwirken dieser Schaltungsteile wird hier nicht näher
eingegangen, da dieses bereits hinlänglich bekannt
ist (siehe beispielsweise "Siemens-Zeitschrift",
Heft 2, 1977, Seiten 82 bis 87).

Von der genannten Speichereinheit SE ist lediglich eine aus zwei Auftragsspeichern WF1 und
WF2 mit jeweils einer Vielzahl von Speicherplätzen
gebildete Auftragsspeicheranordnung dargestellt,
auf die im folgenden noch näher eingegangen wird.

An die genannte Anschlußschaltung SAGAn ist
eine Handvermittlungseinrichtung HVE über fünf
Übertragungsleitungen angeschlossen. Diese
Übertragungsleitungen sind jeweils als Standleitung
benutzt. Eine erste mit SL bezeichnete
Übertragungsleitung ist für einen bidirektionalen
Betrieb ausgelegt und dient u. a. für die
Übertragung von Steuersignalen. Die übrigen
Übertragungsleitungen, die mit A1, A2, B1 und B2
bezeichnet sind, dienen für die Übertragung von
Datensignalen. Mit den Übertragungsleitungen SL,
A1 und B1 ist eine Mikroprozessoranordnung PC1,
die beispielsweise durch einen Personalcomputer
gebildet sein möge, verbunden. Diese Mikroprozessoranordnung weist eine Bedieneinrichtung beispielsweise in Form einer Tastatur T und eines
Bildschirmes BS auf. Mit dieser Mikroprozessoranordnung ist über eine Verbindungsleitung eine
zweite, ebenfalls zu der Handvermittlungseinrichtung gehörende Mikroprozessoranordnung PC2
verbunden. Diese Mikroprozessoranordnung, bei
der es sich ebenfalls um einen Personalcomputer
handeln möge, weist als Anzeigeelement ebenfalls
einen Bildschirm BS auf und ist über die zuvor
genannten Übertragungsleitungen A2 und B2 angeschlossen.

Die Mikroprozessoranordnungen PC1 und PC2
stehen zusätzlich über jeweils eine Verbindungsleitung mit einer Teletex-Anpassungsschaltung TA1
bzw. TA2 in Verbindung. Jede dieser Teletex-
Anpassungsschaltungen ist an eine Übertragungsleitung der bereits genannten Anschlußschaltung SAGD1 angeschlossen.

Im übrigen sei noch darauf hingewiesen, daß mit der Fernschreib-und Datenvermittlungsanlage EDS auch weitere Handvermittlungseinrichtungen in der angegebenen Weise angeschlossen sein können.

Nachdem zuvor der Aufbau der in der Zeichnungen dargestellten Datenvermittlungsanlage erläutert worden ist, wird nunmehr die Wirkungsweise dieser Datenvermittlungsanlage näher beschrieben.

Für die Handvermittlungseinrichtung HVE sind zwei Betriebsarten vorgesehen. Bei einer ersten erfolgt eine Vermittlung von Verbindungen zwischen Teilnehmereinrichtungen, die bei einer bestehenden Verbindung Datensignale mit der gleichen Übertragungsprozedur aufnehmen bzw. abgeben. Derartige Teilnehmereinrichtungen mögen beispielsweise Telex-Teilnehmerendgeräte sein. Bei der zweiten Betriebsart werden Verbindungen zwischen Teilnehmereinrichtungen vermittelt, die Datensignale mit unterschiedlichen Übertragungsprozeduren aufnehmen bzw. abgeben. Diese Teilnehmereinrichtungen mögen beispielsweise Teletex-Teilnehmerendgeräte und Telex-Teilnehmerendgeräte sein. Im folgenden wird nun zunächst auf die erste Betriebsart eingegangen.

Von der Datenvermittlungsanlage DVA können sowohl Verbindungen im Selbstwählverkehr als auch im Handvermittlungsbetrieb vermittelt werden. Im Selbstwählverkehr gibt für den Aufbau einer Verbindung der jeweilige Telex-Teilnehmer in bekannter Weise Wahlinformationen ab, die den zu rufenden Teilnehmer, hier einen Telex-Teilnehmer, bezeichnen. Bei internationalem Verkehr ist in diesen Wahlinformationen auch ein das jeweils zu erreichende Land bezeichnendes Länderkennzeichen enthalten. Anhand der von dem jeweiligen Telex-Teilnehmer abgegebenen Wahlinformationen wird dann von der als Selbstwähleinrichtung ausgebildeten Fernschreib-und Datenvermittlungsanlage EDS automatisch eine Verbindung hergestellt.

Telex-Teilnehmer, die dagegen eine handvermittelte Verbindung wünschen (rufende Telex-Teilnehmer), geben z. B. bei einer internationalen Verbindung über ihr Telex-Teilnehmerendgerät neben einem Landeskennzeichen für das zu erreichende Land und der Rufnummer für das zu rufende Telex-Teilnehmerendgerät ein gesondertes Wahleinleitungszeichen, beispielsweise "00", an die Fernschreib-und Datenvermittlungsanlage EDS ab. Bei Auftreten eines derartigen Wahleinleitungszeichens generiert diese unter der Steuerung der Programmsteuereinheit PE einen Auftrag für die Handvermittlungseinrichtung HVE unter Angabe der Wahlinformationen für das jeweilige rufende und jeweilige gerufene Telex-Teilnehmerendgerät und trägt diesen Auftrag anschließend in den bereits genannten Auftragsspeicher WF1 der Speichereinheit SE ein. Dabei wird dem Auftrag eine fortlaufend von der Programmsteuereinheit PE vergebene Auftragsnummer beigefügt. Das jeweils rufende Telex-Teilnehmerendgerät erhält als Zeichen, daß es mit dem Auftragspuffer WF1 verbunden ist, periodisch ein Wartesignal, beispielsweise in Form einer Telexzeichenfolge "MOM", zugeführt.

Der Auftragsspeicher WF1 ist als Schreib-/Lesespeicher mit einer Vielzahl von Speicherplätzen für die Speicherung von Aufträgen ausgebildet. Die Speicherplätze sind dabei derart anhand der den Aufträgen beigefügten Auftragsnummern miteinander verkettet, daß die Aufträge später in der Reihenfolge ihres Einschreibens wieder auslesbar sind. Um eine Überfüllung dieses Auftragsspeichers durch Aufträge zu vermeiden, die in eine bestimmte Richtung (in bestimmte Länder) verlaufende Verbindungen betreffen, ist die Anzahl der pro Richtung aufnehmbaren Aufträge durch die Programmsteuereinheit PE begrenzt.

Die in den Auftragsspeicher WF1 eingeschriebenen Aufträge sind von der Handvermittlungseinrichtung HVE durch Abgabe von Steuersignalen abrufbar. Diese Abgabe erfolgt mit Hilfe der mit der Mikroprozessoranordnung PC1 verbundenen Tastatur T. Aufgrund dieser Steuersignale, die über die Steuerleitung SL zu der Fernschreib-und Datenvermittlungsanlage EDS hin übertragen werden, können die gespeicherten Aufträge wahlweise entweder richtungsunabhängig oder richtungsabhängig in der Reihenfolge ihres Einschreibens ausgelesen werden. Durch ein solches richtungsabhängiges Auslesen von Aufträgen ist es beispiels weise möglich, bei Vorhandensein mehrerer Handvermittlungseinrichtungen von jeder dieser lediglich in bestimmte Richtungen verlaufende Verbindungen zu vermitteln.

Auf die Abgabe eines Steuersignals hin wird der jeweils als nächster zu bearbeitende Auftrag zu der Handvermittlungseinrichtung hin übertragen. Für diese Übertragung können beispielsweise gemeinsam die Datenleitungen A1, B1 sowie die Steuerleitung SL benutzt werden. Die in einem solchen übertragenen Auftrag enthaltenen Wahlinformationen werden von der Mikroprozessoranordnung PC1 aufgenommen und über den Bildschirm BS dem Bediener der Handvermittlungseinrichtung angezeigt. Der Bediener versucht wiederum unter Abgabe eines entsprechenden Steuersignals anhand der vorliegenden Wahlinformationen eine Verbindung zu dem gewünschten Telex-Teilnehmerendgerät (gerufenes Endgerät) aufzubauen. Für diesen Verbindungsaufbau werden die Wahlinformationen für das zu rufende Telex-Teilnehmerendgerät der Fernschreib-und Datenvermittlungsanlage EDS zugeführt, die unter teilweiser Benutzung von auch für den Selbstwählverkehr verwendeten Vermittlungsprozeduren versucht, das gewünschte Telex-Teilnehmerendgerät zu erreichen. Informationen über einen erfolgreichen Versuch werden der Mikroprozessoranordnung PC1 mitgeteilt und auf dem Bildschirm BS angezeigt. Ist das gewünschte Telex-Teilnehmerendgerät erreichbar, wird dann von der Handvermittlungseinrichtung HVE die Durchschaltung der beiden an der Verbindung beteiligten Telex-Teilnehmerendgeräte eingeleitet. Anderenfalls wird ein erneuter Versuch für einen Verbindungsaufbau unternommen.

Vor der eigentlichen Durchschaltung werden zunächst die für eine Gebührenerfassung erforderlichen Daten ermittelt, wie z. B. Angaben bezüglich der zu berüchsichtigenden Gebührenzonen. Sind diese Daten festgelegt, so erfolgt die Durchschaltung des rufenden und des gerufenen Telex-Teilnehmerendgerätes unter der Steuerung der Fernschreib-und Datenvermittlungsanlage EDS mit Hilfe von Durchschalteprozeduren, die von dieser auch teilweise im Selbstwählverkehr benutzt sind.

Im Zuge dieser Durchschaltung werden die Kennungen zwischen den beiden Endgeräten ausgetauscht. Die nunmehr aufgebaute Verbindung verläuft dabei zunächst über die beiden Datenleitungen A1 und B1 der Handvermittlungseinrichtung, in dem die beiden Datenleitungen in der Mikroprozessoranordnung PC1 durch einen steuerbaren Schalter miteinander verbunden werden. Nachdem sichergestellt ist, beispielsweise durch Mitlesen, daß das rufende Telex-Teilnehmerendgerät seine Nachrichten ordnungsgemäß übermitteln kann, wird die Verbindung von der Handvermittlungseinrichtung HVE durch Abgabe eines entsprechenden Steuersignals an die Fernschreib-und Datenvermittlungsanlage EDS übergeben. Die Handvermittlungseinrichtung steht dann wieder für die Bearbeitung eines weiteren Auftrages zur Verfügung. Das Auslösen einer Verbindung erfolgt ausschließlich durch die Fernschreib-und Datenvermittlungsanlage.

Wie bereits oben erwähnt, weist die Handvermittlungseinrichtung HVE eine weitere, mit den Datenleitungen A2 und B2 verbundene Mikroprozessoranordnung PC2 auf. Mit dieser weiteren Mikroprozessoranordnung kann unter Verwendung der Tastatur T der Mikroprozessoranordnung PC1 parallel ein weiterer Auftrag in der zuvor beschriebenen Weise bearbeitet werden.

Mit Hilfe der Handvermittlungseinrichtung HVE können auch Aufträge für vorangemeldete Verbindungen vermittelt werden. Derartige Aufträge werden von der Fernschreib-und Datenvermittlungsanlage EDS derart gebildet, daß sie jeweils neben den bereits genannten Wahlinformationen und einer Auftragsnummer Angaben bezüglich der aktuellen Uhrzeit aufweisen. Diese Aufträge werden in den bereits genannten Auftragsspeicher WF2, der in der gleichen Weise wie der Auftragsspeicher WF1 aufgebaut ist, eingetragen. Dieser Auftragsspeicher kann alternativ zu dem Auftragsspeicher WF1 von der Handvermittlungsanlage HVE durch Abgabe von Steuersignalen angesteuert werden.

Aufgrund der in den zuvorgenannten Aufträgen enthaltenen Uhrzeitangaben werden diese bei einer Ansteuerung des Auftragsspeichers WF2 sofort für eine Bearbeitung ausgelesen. In einem Dialog mit dem jeweiligen Telex-Teilnehmer werden von diesen Angaben bezüglich des gewünschten Bearbeitungszeitraumes übertragen. Anhand dieser Angaben ersetzt der Bediener der Handvermittlungseinrichtung die in dem jeweiligen Auftrag enthaltenen Uhrzeitangaben durch Zeitangaben, die den frühesten gewünschten Bearbeitungszeitpunkt angeben, und schreibt den jeweils geänderten Auftrag zurück in den Auftragsspeicher WF2. Bei nachfolgenden Ansteuerungen werden die in dem Auftragsspeicher WF2 eingetragenen, für einen bestimmten Zeitpunkt vorangemeldeten Aufträge in der Reihenfolge ihres Einschreibens ausgelesen. Dabei wird für jeden Auftrag versucht, das jeweilige gerufene Telex-Teilnehmerendgerät zu erreichen. Falls dies erfolgreich ist, wird das jeweilige rufende Telex-Teilnehmerendgerät im Rückruf angerufen und die Verbindung zu dem jeweiligen gerufenen Telex-Teilnehmerendgerät in der zuvor beschriebenen Weise durchgeschaltet. Falls das jeweilige gerufene Telex-Teilnehmerendgerät nicht erreichbar ist, wird der momentan nicht bearbeitbare Auftrag mit korrigierten Angaben bezüglich des Bearbeitungszeitpunktes versehen und erneut in den Auftragsspeicher WF2 eingetragen.

Vorstehend wurde davon ausgegangen, daß sämtliche Angaben für den Aufbau handzuvermittelnder Verbindungen bereits von den eine solche Verbindung wünschenden Telex-Teilnehmern geliefert werden. Sollten jedoch die gelieferten Angaben für den Aufbau von handzuvermittelnden Verbindungen nicht ausreichend kann, so kann von der Handvermittlungseinrichtung HVE aus durch Abgabe von Steuersignalen auf eine in der Zeichnung nicht näher dargestellte sogenannte Zielnetzdatei der Fernschreib-und Datenvermittlungsanlage EDS zugegriffen werden. In dieser Zielnetzdatei sind beispielsweise sämtliche Verbindungsmöglichkeiten (Transitwege) nach Länderkennzeichen sortiert. Anhand dieser Angaben kann der Bediener der Handvermittlungseinrichtung im Bedarfsfalle die ihm bereits vorliegenden Wahlinformationen ergänzen und die gewünschten Verbindungen anschließend in der bereits dargestellten Weise herstellen.

Ergänzend zu der gerade beschriebenen ersten Betriebsart der Hand vermittlungseinrichtung HVE sei noch darauf hingewiesen, daß anstelle der beiden getrennten Auftragsspeicher WF1 und WF2 auch ein einziger Auftragsspeicher benutzt werden kann, welcher sämtliche Angaben enthält, die sowohl eine richtungsabhängige als auch bearbeitungszeitabhängige Bearbeitung von Aufträgen ermöglichen.

Im folgenden wird nun noch auf die zweite Betriebsart der Handvermittlungseinrichtung HVE eingegangen. In dieser Betriebsart ist ein Übergangsverkehr von Teletex-Teilnehmerendgeräten zu nur über handvermittelte Verbindungen erreichbaren Telex-Teilnehmerendgeräten möglich. Wünscht ein Teletex-Teilnehmer einen solchen Übergangsverkehr, so teilt er dies der Fernschreib- und Datenvermittlungsanlage EDS durch den Wahlinformationen beigefügte Wahleinleitungszeichen mit. Bei Auftreten derartiger Wahleinleitungszeichen übernimmt die Fernschreib-und Datenvermittlungsanlage die auf die Wahlinformationen folgenden, von dem Teletex-Teilnehmerendgerät abgegebenen Datensignale und überträgt diese Datensignale zusammen mit den zuvor empfangenen Wahlinformationen an eine der Teletex-Anpassungsschaltungen TA1 und TA2 entsprechend den Teletex-Konventionen. Diese Teletex-Anpassungsschaltungen weisen jeweils einen weiteren Auftragsspeicher auf, in welchen Datensignale und zugehörige Wahlinformationen umfassende Aufträge vor einer Bearbeitung durch die Handvermittlungseinrichtung zunächst zwischengespeichert werden. Den Aufträgen können dabei jeweils wieder Informationen in Form einer Auftragsnummer, die beispielsweise von der der jeweiligen Teletex-Anpassungsschaltung zugehörigen Mikroprozessoranordnung auf eine Anforderung hin vergeben wird, und ggf. von Angaben bezüglich eines Bearbeitungszeitpunktes beigefügt sein, so daß die Aufträge auch richtungsabhängig bzw. bearbeitungszeitabhängig in der Reihenfolge ihres Einschreibens für eine Bearbeitung auslesbar sind.

Liegt in einer der Teletex-Anpassungsschaltungen, die beispielsweise die Teletex-Anpassungsschaltung TA1 sein möge, ein Auftrag für die Handvermittlungseinrichtung vor, so gibt diese ein Auftragsmeldesignal an die Mikroprozessoranordnung PC1 ab. Auf ein solches Auftrags meldesignal hin fordert der Bediener dann die in den als nächsten zu bearbeitenden Auftrag enthaltenen Wahlinformationen an und versucht anhand dieser durch ein über die Tastatur T eingegebenes Steuersignal eine Verbindung in der zuvor beschriebenen Weise zu dem gewünschten Telex-Teilnehmerendgerät aufzubauen. Ist ein solcher Versuch erfolgreich, so ruft der Bediener nach Abfrage des in dem Telex-Teilnehmerendgerät vorhandenen Kennungsgebers durch ein an die Teletex-Anpassungsschaltung TA1 abgegebenes Steuersignal die für die gerade aufgebaute Verbindung gespeicherten Datensignale ab und veranlaßt deren Übertragung zu dem Telex-Teilnehmerendgerät hin. Bei einer solchen Übertragung, die über die Mikroprozessoranordnung PC1 und die Datenleitung B1 erfolgt, nimmt die Mikroprozessoranordnung PC1 im übrigen noch eine Codeumsetzung vom Teletex-in das Telexformat vor.Hat der Bediener der Handvermittlungseinrichtung HVE festgestellt daß die Datensignale ordnungsgemäß das Telex-Teilnehmerendgerät erreicht haben, bereitet er eine Quittung für das Teletex-Teilnehmerendgerät vor, von dem zuvor die gerade übertragenen Datensignale aufgenommen worden sind. Die Rufnummer für dieses Teletex Teilnehmerendgerät entnimmt er dabei dem noch in der Teletex-Anpassungsschaltung TA1 gespeicherten Auftrag. Die Quittung enthält auch die Kennung des die Datensignale empfangenen Telex-Teilnehmerendgerätes. Diese so vorbereitete Quittung wird anschließend in Form eines Quittungsrufes über die Teletex-Anpassungsschaltung TA1 und die Fernschreib-und Datenvermittlungsanlage EDS übertragen. Ist auch dieser Quittungsruf erfolgreich abgeschlossen, wird der in der Teletex-Anpassungsschaltung TA1 noch gespeicherte Auftrag gelöscht.

Auch bei der gerade beschriebenen zweiten Betriebsart der Handvermittlungseinrichtung HVE kann die zweite Mikroprozessoranordnung PC2 in Verbindung mit der Teletex-Anpassungsschaltung TA2 dazu benutzt werden, gleichzeitig einen weiteren Auftrag im Übergangsverkehr zwischen einem Teletex-Teilnehmerendgerät und einem Telex-Teilnehmerendgerät zu bearbeiten. Darüber hinaus ist es auch je nach dem im Übergangsverkehr auftretenden Verkehrsaufkommen möglich, die Telex-Anpassungsschaltungen jeweils derart auszulegen, daß diese auf einer Mehrzahl von mit der Fernschreib-und Datenvermittlungsanlage EDS verbundenen Übertragungsleitungen auftretende Aufträge übernehmen können. Ebenso ist es möglich, die Teletex-Anpassungsschaltungen mit mehreren, zu unterschiedlichen Handvermittlungseinrichtungen gehörenden Mikroprozessoranordnungen zu verbinden.

Die zuvor beschriebenen zwei Betriebsarten können von dem Bediener der Handvermittlungseinrichtung HVE wahlfrei ausgewählt werden, so daß es beispielsweise auch möglich ist, gleichzeitig Aufträge mit und ohne Übergangsverkehr zu bearbeiten.

Vorstehend wurden als Beispiele lediglich die Fälle betrachtet, daß in der ersten Betriebsart der Handvermittlungseinrichtung Verbindungen zwischen zwei Telex-Teilnehmereinrichtungen und in der zweiten Betriebsart Verbindungen zwischen Teletex-Teilnehmereinrichtungen und Telex-Teilnehmereinrichtungen aufgebaut werden. Mit Hilfe der Vermittlungseinrichtung sind jedoch auch allgemein im ersten Betriebsfall mit gleichen Datenübertragungsprozeduren arbeitende Teilnehmereinrichtungen bzw. in der zweiten Betriebsart mit unterschiedlichen Datenübertragungsprozeduren arbeitende Teilnehmereinrichtungen miteinander verbindbar. Als Beispiele für die zweite Betriebsart seien hier noch Verbindungen zwischen Teletex-Teilnehmereinrichtungen und Fernkopiereinrichtungen (FAX) bzw. zwischen Fernkopiereinrichtungen und Telex-Teilnehmereinrichtungen genannt.

Abschließend sei noch darauf hingewiesen, daß abweichend von dem zuvor beschriebenen Ausführungsbeispiel unter Handvermittlungseinrichtungen auch solche Einrichtungen verstanden werden sollen, die anstelle der manuell bedienbaren Mikroprozessoranordnungen Anordnungen aufweisen, welche entsprechend ihrer Kapazität die Bearbeitung von Aufträgen automatisch in der angegebenen Weise abwickeln.

## Ansprüche

1. Schaltungsanordnung zum Übertragen von Datensignalen zwischen mit einer ersten Datenübertragungsprozedur arbeitenden ersten Teilnehmereinrichtungen (Tx1 bis Txm) und mit einer von der ersten Datenübertragungsprozedur verschiedenen zweiten Datenübertragungsprozedur arbeitenden zweiten Teilnehmereinrichtungen (Tx1 bis Txm) über eine Datenvermittlungsanlage (EDS) unter Umsetzung der von den ersten Teilnehmereinrichtungen abgegebenen Datensignale in von den zweiten Teilnehmereinrichtungen aufnehmbare Datensignale, wobei die ersten Teilnehmereinrichtungen und die zweiten Teilnehmereinrichtungen an gesonderte Anschlußschaltungen einer ersten bzw. zweiten Gruppe von Anschlußschaltungen angeschlossen sind, **dadurch gekennzeichnet**, daß an wenigstens einer Anschlußschaltung jeder Gruppe von Anschlußschaltungen eine wenigstens eine Auftragsspeicheranordnung (z. B. TA 1) und eine Bedienungseinrichtung (PC1, PC2) aufweisende Handvermittlungseinrichtung (HVE) angeschlossen ist, daß in die Auftragsspeicheranordnung von der Datenvermittlungsanlage (EDS) her für handzuvermittelnde Verbindungen Auftrtäge, die jeweils zumindest eine fortlaufend vergebene Auftragsnummer sowie von der jeweiligen ersten Teilnehmereinrichtung abgegebene Wahlinformationen und Datensignale enthalten, einschreibbar und in der Reihenfolge ihres Einschreibens durch von der Bedienungseinrichtung (PC1, PC2) abgegebene Steuersignale derart auslesbar sind, daß die Bedienungseinrichtung zu jedem Auftrag zunächst lediglich die für einen Verbindungsaufbau erforderlichen Wahlinformationen und nach einem erfolgten Verbindungsaufbau die zugehörigen Datensignale für eine Umsetzung und anschließende Weiterleitung an die in Frage kommende zweite Teilnehmereinrichtung zugeführt erhält.

2. Schaltungsanordnung nach Anspruch 1, **dadurch gekennzeichnet**, daß die Bedienungseinrichtung (PC1, PC2) bei Vorliegen mindestens eines zu bearbeitenden Auftrages von der Auftragsspeicheranordnung (TA1) ein Auftragsmeldesignal zugeführt erhält und auf ein solches Auftragsmeldesignal hin für den jeweiligen Auftrag eine Auftragsnummer vergibt.

3. Schaltungsanordnung nach Anspruch 1 oder 2, **dadurch gekennzeichnet**, daß die Bedienungseinrichtung (PC1, PC2) nach Weiterleiten von Datensignalen ein Quittungssignal an diejenige erste Teilnehmereinrichtung abgibt, von der zuvor die Datensignale aufgenommen worden sind.

4. Schaltungsanordnung nach einem der Ansprüche 1 bis 3, **dadurch gekennzeichnet**, daß die Bedienungseinrichtung (PC1, PC2) aus einer Mikrocomputeranordnung gebildet ist.

# EUROPÄISCHER RECHERCHENBERICHT

**Europäisches Patentamt**

Nummer der Anmeldung

EP 88 10 3806

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 060 921 (SIEMENS) <br> * Zusammenfassung * <br> --- | 1-4 | H 04 L 11/00 |
| A | ERICSSON REVIEW, Band 60, Nr. 3, 1983, Seiten 136-143, Stockholm, SE; B. SANDNES et al.: "The new Oslo telex exchange operating functions" <br> * Seite 140, rechte Spalte, Zeile 32 - Seite 142 * <br> ----- | 1-4 | |

**RECHERCHIERTE SACHGEBIETE (Int. Cl.4)**

H 04 L
H 04 M

Der vorliegende Recherchenbericht wurde für alle Patentansprüche erstellt

| Recherchenort | Abschlußdatum der Recherche | Prüfer |
|---|---|---|
| DEN HAAG | 12-07-1988 | MIKKELSEN C. |